# EUROPÄISCHE PATENTSCHRIFT

(11) **EP 1 485 419 B1**
(45) Veröffentlichungstag und Bekanntmachung des Hinweises auf die Patenterteilung: **15.06.2005**
(21) Anmeldenummer: 03744776.0
(22) Anmeldetag: 23.01.2003
(51) Int. Cl.: C08G 18/61

(54) **SILICONHALTIGE SCHAUMSTOFFE**
FOAMS CONTAINING SILICON
MOUSSES CONTENANT DE LA SILICONE

(30) Priorität: 21.03.2002 DE 10212658
(43) Veröffentlichungstag der Anmeldung: 15.12.2004
(73) Patentinhaber: Consortium für elektrochemische Industrie GmbH, 81379 München (DE)
(72) Erfinder: STANJEK, Volker, 81479 München (DE); SCHÄFER, Oliver, 81377 München (DE); PACHALY, Bernd, 84561 Mehring-Öd (DE)
(74) Vertreter: Fritz, Helmut, Dr.
(86) Internationale Anmeldenummer: PCT/EP2003/000702
(87) Internationale Veröffentlichungsnummer: WO 2003/080696

(56) Entgegenhaltungen:
- DE-C- 4 108 326
- DE-C- 10 151 478
- GB-A- 2 338 239

## Beschreibung

Die Erfindung betrifft schäumbare Zubereitungen aus Aminoalkyl- oder Hydroxyalkyl-terminierten Organopolysiloxanen, Di- oder Polyisocyanaten und Treibmittel und daraus.herstellbare Schäume.

Sowohl reine Siliconschaumstoffe, als auch Polyurethanschäume, hergestellt aus organischen Polyolen und Di- oder Polyisocyanaten sind seit langem bekannt. Beide Stoffgruppen besitzen jedoch jeweils spezifische Vor- und Nachteile. So zeichnen sich Siliconschäume zwar in der Regel durch eine gute Hoch- und Tieftemperaturbeständigkeit aus, verfügen gleichzeitig allerdings auch über eine vergleichsweise hohe Dichte und ein nur sehr mäßiges mechanisches Eigenschaftsprofil. Polyurethanschäume hingegen besitzen meist eine hervorragende Mechanik - dies gilt sowohl für die Polyurethanhart- als auch Polyurethanweichschäume. Ein Nachteil vieler Polyurethanschäume ist hingegen ein für viele Anwendungen unzureichendes Brandverhalten, welches - wenn überhaupt - nur durch große Mengen an zugesetzten Brandschutzmitteln ausgeglichen werden kann.

Durch den Einsatz von Silicon-Polyurethan-Copolymeren, d.h. von Polysiloxanen, die auch über Polyurethan- und/oder Harnstoffeinheiten verfügen, sollte es somit möglich sein, neuartige Schaumstoffe zu entwickeln, die über neue, auf die jeweilige Anwendung genau zugeschnittene Kombinationen von Eigenschaften aufweisen.

In DE 41 08 326 C1 sind Siliconschaumstoffe beschrieben, die sich durch eine Reaktion von hydroxyalkylfunktionellen Polysiloxanen mit Di- oder Polyisocyanaten herstellen lassen. Die Vernetzung der Silicone erfolgt dabei während der Schaumbildung. Als Treibmittel dient Wasser, das mit dem im Überschuß eingesetzten Isocyanaten unter Freisetzung von Kohlendioxid und der Bildung von Harnstoffeinheiten reagiert. Allerdings werden dabei lineare Polysiloxane eingesetzt, die aufgrund der damals verfügbaren Herstellungsverfahren nur zum Teil mit Hydroxyalkylgruppen terminiert sind und daneben auch noch über einen Anteil an Kettenenden verfügen, die aus - Si(CH₃)₂OH Gruppen bestehen. Aus diesen Materialien lassen sich lediglich weiche, elastische Schäume herstellen. Die Herstellung von harten Schäumen ist mit derartigen Prepolymeren nicht möglich. So können selbst bei der Verwendung von kurzkettigen Polyorganosiloxanen mit lediglich 10-12 Kettengliedern und eines großen Isocyanatüberschusses (Einsatz von bis zu 600 g 4,4-Diphenylmethandiisocyanat pro 1000 g Polyorganosiloxan) nur Weichschäume erzeugt werden. Außerdem werden die nach diesem Verfahren hergestellten Siliconschäume nicht vollständig klebfrei.

Die Umsetzung von hydroxyalkyl- oder aminoalkylterminierten Polysiloxanen mit Di- oder Polyisocyanaten ist zudem noch aus weiteren Literaturstellen bekannt, u.a. aus US 5512650 oder WO 97/40103. Allerdings wird diese Reaktion dabei nicht zur Herstellung von Schaumstoffen sondern ausschließlich zur Erzeugung von Elastomeren oder von Prepolymeren für Hotmelt- oder Sealantanwendungen beschrieben. Auch sind die dort beschriebenen Verbindungen auf Grund ihrer hohen Molmassen und damit verbundenen sehr hohen Viskositäten nicht geeignet, um sie bei einem Verfahren zur Herstellung von Schaumstoffen aus Prepolymeren einzusetzen, bei dem die Vernetzung der Prepolymere erst während der Schaumbildung und bei niedrigen Temperaturen erfolgen soll.

Gegenstand der Erfindung sind schäumbare Zubereitungen aus den Bestandteilen
(A) lineare oder verzweigte Organopolysiloxane, deren Kettenenden zu mindestens 95 % mit Aminoalkyl- oder Hydroxyalkylgruppen der allgemeinen Formel (1)

   -O-SiR¹ ₂O-SiR² ₂-R³-Z (1),

   endterminiert sind, herstellbar durch Umsetzung von linearen oder verzweigten Organopolysiloxanen, welche Endgruppen der allgemeinen Formel (2)

   -O-SiR¹ ₂-OH (2),

   aufweisen, mit Organosiliciumverbindungen, die aus Strukturelementen der allgemeinen Formel (3) zusammengesetzt sind,

   -[SiR² ₂-R³-Y-]ₖ (3),

   wobei
   - **R**^{**1**} und **R**^{**2**}: einen monovalenten, gegebenenfalls mit -CN, oder Halogen substituierten C₁-C₁₂-Kohlenwasserstoffrest, in dem eine oder mehrere, einander nicht benachbarte Methyleneinheiten durch Gruppen -O- ersetzt sein können,
   - **R**^{**3**}: einen divalenten, gegebenenfalls Cyano- oder halogensubstituierten C₁-C₁₂-Kohlenwasserstoffrest,
   - **Z**: eine Gruppe OH oder NH₂,
   - **Y**: ein Sauerstoffatom oder einen Rest NR⁴,
   - **R**^{**4**}: ein Wasserstoffatom oder ein weiterer Rest der allgemeinen Formel (3), in der **k** den Wert 1 hat und **Y** eine Gruppe NH₂ bedeutet, und
   - **k**: eine ganze Zahl von 1 bis 1000 bedeuten,
(B) Di- oder Polyisocyanate und
(C) Trerbmittel.

Bei der Verschäumung der schäumbaren Zubereitungen erfolgt die Schaumbildung mittels einer Reaktion der Organopolysiloxane (A) mit Di- oder Polyisocyanaten (B). Die Vernetzung der Polysiloxanprepolymere findet erst während der Schaumbildung statt, so daß auch niederviskose Materialien eingesetzt werden können, und die Schaumbildung sogar bei Raumtemperatur durchgeführt werden kann. Die hergestellten Schäume weisen ein hervorragendes mechanisches Eigenschaftsprofil auf.

Bevorzugt werden dabei Organopolysiloxane (A) eingesetzt, deren Kettenenden zu mindestens 97 %, insbesondere zu mindestens 99 % mit Aminoalkyl- oder Hydroxyalkylgruppen der allgemeinen Formel (1) endterminiert sind. An einem Molekül Organopolysiloxan (A) können auch sowohl Aminoalkyl- als auch Hydroxyalkylgruppen der allgemeinen Formel (1) vorhanden sein.

Als Reste **R**^{**1**} und **R**^{**2**} werden bevorzugt unverzweigte Alkylgruppen, vorzugsweise mit 1 bis 6 Kohlenstoffatomen, oder aromatische Kohlenwasserstoffe, wie gegebenenfalls durch C₁-C₆-Alkylreste, -CN oder Halogen substituierte Phenylreste eingesetzt. Besonders bevorzugte Reste **R**^{**1**} und **R**^{**2**} sind Ethyl-, Methyl- oder Phenylgruppen. Beide Reste **R**^{**1**} und **R**^{**2**} an einem Siliciumatom können gleiche oder verschiedene Bedeutungen haben, im allgemeinen haben sie jedoch die gleiche Bedeutung.

Reste **R**^{**3**} sind vorzugsweise unsubstituiert. Reste **R**^{**3**} sind insbesondere lineare Alkylenketten mit 1 bis 6, vorzugsweise 3 und 4 Kohlenstoffatomen oder cyclische Kohlenwasserstoffreste. Besonders bevorzugt sind dabei n-Propylenketten.

**k** bedeutet vorzugsweise eine ganze Zahl von 1 bis 100, insbesondere 2 bis 50.

Der Polymersationsgrad n der Polyorganosiloxankette (A) kann bis zu 10000 betragen, bevorzugt werden jedoch Polyorganosiloxane mit einer Kettenlänge n von 5 bis 100 verwendet. Als Polysiloxane (A) werden bevorzugt lineare Organopolysiloxane (A), insbesondere der allgemeinen Formel (4)

Z-R³-SiR² ₂-O-SiR¹ ₂-O[-SiR¹ ₂O]ₘ-SiR² ₂-R³-Z (4),

eingesetzt. Ein besonders bevorzugtes Grundgerüst für die hydroxyalkyl- oder aminoalkylfunktionellen Organopolysiloxane (A) stellt die Polydimethylsiloxankette dar.

Die linearen Organopolysiloxane (A) der allgemeinen Formel (4) werden aus Organopolysiloxanen der allgemeinen Formel (5)

H-O[-SiR¹ ₂O]ₘ-H (5),

mit Organosiliciumverbindungen, die aus Strukturelementen der allgemeinen Formel (3) zusammengesetzt sind, hergestellt.

In den allgemeinen Formeln (4) und (5) weisen
**m** eine ganze Zahl von 1 bis 10000 und
**R**^{**1**}**, R**^{**2**}**, R**^{**3**} und Z die vorstehenden Bedeutungen auf.

Bei den Organosiliciumverbindungen, die aus Strukturelementen der allgemeinen Formel (3) zusammengesetzt sind, kann es sich um cyclische Monomere (k = 1), um Dimere, um Oligomere oder um Polymere handeln. Bevorzugt werden dabei die Verbindungen der Formeln (6) und (7) 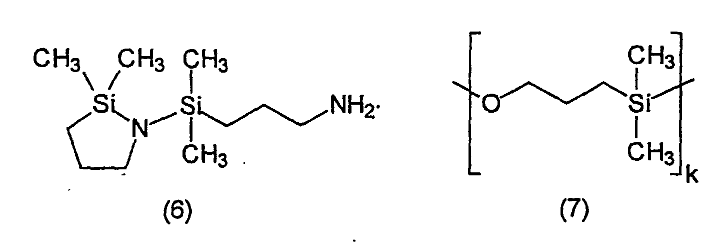 eingesetzt, wobei
- **k**: eine ganze Zahl von mindestens 2 bedeutet.

Werden Organosiliciumverbindungen eingesetzt, in denen **Y = R**^{**4**}, wie beispielsweise die Verbindung der Formel (6), so verläuft die Terminierung der Siliconketten bevorzugt bereits bei Raumtemperatur und bevorzugt ohne Katalysatorzusatz (K) vollständig.

Werden Organosiliciumverbindungen eingesetzt, in denen **Y** = Sauerstoff, wie beispielsweise der Formel (7), so erfolgt die Reaktion bevorzugt bei Temperaturen von 0°C bis 150 °C bevorzugt in Gegenwart eines Katalysators (K).

Als Katalysatoren (K) werden vorzugsweise saure oder basische Verbindungen verwendet, z.B. teilveresterte Phosphorsäuren, Carbonsäuren, teilveresterte Carbonsäuren, Alkylammoniumhydroxide, Ammoniumalkoxide, Alkylammoniumfluoride oder Aminbasen, Organo-Zinnverbindungen, Organo-Zinkverbindungen, Organo-Titanverbindungen. Die verwendeten Katalysatoren (K) werden nach der Beendigung der Reaktion vorzugsweise durch Zugabe von sogenannten Anti-Katalysatoren oder Katalysator-Giften deaktiviert. Bei Säure und Basen gelingt Deaktivierung bereits durch eine einfache Neutralisationsreaktion.

Die Organosiliciumverbindungen, die aus Strukturelementen der allgemeinen Formel (3) zusammengesetzt sind, werden dabei bevorzugt in den jeweils korrekten stöchiometrischen Verhältnissen oder in einem geringem Überschuß < 5 % eingesetzt. Bei einer geeigneten Reaktionsführung gelingt dabei die Herstellung von hydroxyalkyl- oder aminoalkylfunktionellen Organopolysiloxanen (A), in denen sich mittels ¹H-NMR und ²⁹Si-NMR keine freien Si-OH-Gruppen mehr nachweisen lassen.

Des weiteren ist es mittels der beschriebenen Reaktionen auch möglich, nacheinander zunächst einen Teil der Endgruppen der allgemeinen Formel (2) mit Aminoalkylgruppen der allgemeinen Formel (1) und anschließend alle übrigen Endgruppen der allgemeinen Formel (2) der Organopolysiloxane mit Hydroxyalkylgruppen der allgemeinen Formel (1) zu terminieren. Auf diese Weise erhält man Organopolysiloxane (A), die über sowohl Hydroxyalkyl- als auch Aminoalkylendgruppen verfügen, die gegenüber Isocyanaten deutlich unterschiedliche Reaktivitäten aufweisen und zu Schäumen führen, bei denen die Siliconketten sowohl über Harnstoffeinheiten als auch über Urethaneinheiten mit den übrigen Molekülteilen verbunden werden. So lassen sich sowohl die Kinetik der Schaumhärtung als auch das Eigenschaftsprofil der ausgehärteten Schäume in weiten Bereichen auf den jeweiligen Bedarf hin anpassen.

In den schäumbaren Zubereitungen werden den Organopolysiloxanen (A) ein oder mehrere Diorganoisocyanate oder Polyorganoisocyanate (B) zugesetzt. Hier kommen sämtliche bekannten Di- oder Polyisocyanate in Frage. Bevorzugt werden Di- oder Polyisocyanate der allgemeinen Formel (8)

Q(NCO)ₙ (8),

eingesetzt, wobei
- **Q**: einen k-funktionellen aromatischen oder aliphatischen Kohlenwasserstoffrest und
- **n**: eine ganze Zahl von mindestens 2 bedeuten.

Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Zubereitungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocanat oder Biuret-triisocyanate. Diorganoisocyanate oder Polyorganoisocyanate (B) können allein oder im Gemisch eingesetzt werden. Vorzugsweise werden die Di- oder Polyisocyanate (B) in einer Menge von mindestens 2 Mol, insbesondere von 2 bis 10 Mol pro Mol Organopolysiloxan (A) eingesetzt. Der molare Überschuß an Isocyanaten wird für die Umsetzung mit Wasser und gegebenenfalls auch für eine Vernetzung über die Ausbildung von Biureteinheiten verbraucht. Die eingesetzten Diorganoisocyanate oder Polyorganoisocyanate (B) bzw. deren Zubereitungen verfügen im Mittel über mindestens zwei Isocyanateinheiten pro Molekül, bevorzugt über 2-4 Isocyanateinheiten pro Molekül.

In den schäumbaren Zubereitungen sind Treibmittel (C) für die Schaumbildung erforderlich. Das Treibmittel (C) kann ausgewählt werden aus chemischen Treibmitteln (CC), und physikalischen Treibmitteln (CP). Als chemische Treibmittel (CC) kommt bevorzugt Wasser in Frage . Als physikalische Treibmittel (CP) kommen bevorzugt in Frage niedermolekulare Kohlenwasserstoffe wie z.B. Propan, Butan oder Cyclopentan, Dimethylether oder fluorierte Kohlenwasserstoffe wie 1,1-Difluorethan oder 1,1,1,2-Tetrafluorethan. Der Einsatz physikalischer Treibmittel (CP) ist möglich, um die Schaumbildung zu unterstützen und so zu Schäumen mit noch geringerer Dichte zu gelangen.

Die schäumbaren Zubereitungen können Katalysatoren (D) enthalten. Als Katalysatoren (D) sind u.a. Organozinnverbindungen geeignet. Beispiele sind Dibutylzinndilaurat, Dioctylzinndilaurat, Dibutylzinndiacetat, Dibütylzinndioctoat oder Dibutylzinn-bis-(dodecylmercaptid). Des weiteren kommen auch zinnfreie Katalysatoren (D) z.B. organische Titanate, Eisenkatalysatoren, wie organische Eisenverbindungen, organische und anorganische Schwermetallverbindungen oder tertiäre Amine in Frage. Als Beispiel für eine organische Eisenverbindungen sei Eisen(III)acetylacetonat genannt. Beispiele für tertiäre Amine (D) sind Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, Bis-N,N-dimethylaminoethylether, N,N-Dimethyl-2-aminoethanol, N,N-Dimethylaminopyridin, N,N,N,N-Tetramethyl-bis-(2-Aminoethylmethylamin, 1,5-Diazabicyclo[4.3.0]non-5-en, 1,8-Diazabicyclo[5.4.0]undec-7-en oder N-Ethylmorpholin.

Katalysatoren (D) können einzeln oder als Gemisch eingesetzt werden. Bevorzugt wird ein Katalysatorgemisch (D) verwendet, von denen ein Katalysator (D) vor allem die Reaktion dem Hydroxyalkylsiloxan und dem Isocyanat beschleunigt, während der zweite Katalysator (D) bevorzugt die Reaktion des Isocyanates mit Wasser katalysiert. Durch geeignet gewählte Konzentrationsverhältnisse zwischen diesen Katalysatoren (D) kann dann ein günstiges Geschwindigkeitsverhältnis zwischen Schaumbildung und -härtung erreicht werden. Geeignet sind hier oftmals Katalysatorgemische (D), die sowohl mindestens eine Organozinnverbindung als auch mindestens ein tertiäres Amin enthalten. Das Gewichtsverhältnis zwischen den tertiären Aminen und den Organozinnverbindungen im Katalysatorgemisch (D) liegt bevorzugt bei 1:1 bis 5:1.

Bezogen auf die schäumbare Mischung wird der Katalysator (D) bevorzugt in einer Menge von 0,1 - 6,0 Gew.-%, besonders bevorzugt in einer Menge von 0,3 - 4,0 Gew.-% eingesetzt.

In vielen Fällen ist es von Vorteil, den schäumbaren Zubereitungen Schaumstabilisatoren (E) zuzugeben. Als geeignete Schaumstabilisatoren können beispielsweise die handelsüblichen durch Polyetherseitenketten modifizierten Siliconoligomere eingesetzt werden, die auch zur Herstellung von herkömmlichen Polyurethanschäumen eingesetzt werden. Die Schaumstabilisatoren werden in Mengen von bis zu 6 Gew.-%, vorzugsweise von 0,3 bis 3 Gew.-%, jeweils bezogen auf die schäumbaren Zubereitungen, eingesetzt. Der Schaumstabilisator (E) kann dabei zugleich als Löslichkeitsvermittler für das Wasser dienen. Zudem können auch noch weitere Löslichkeitsvermittler und / oder Emulgatoren zugesetzt werden.

Des weiteren kann auch der Zusatz von Zellregulantien, Thixotropiermitteln und/oder Weichmachern vorteilhaft sein. Zur Verbesserung der Brandbeständigkeit können den schäumbaren Zubereitungen zudem Flammschutzmittel zugesetzt werden, z.B. phosphorhaltige Verbindungen, vor allem Phosphate und Phosphonate, sowie auch halogenierte Polyester und Polyole oder Chlorparaffine. Es können auch sämtliche weiteren zur Silicon-Modifizierung üblichen Zusatzstoffe mit in die schäumbare Zubereitung eingearbeitet werden. Beispiele hierfür sind Füllstoffe, wie hochdisperse Kieselsäure, Ruß, gefällte Kreide oder auch Farbstoffe.

Die schäumbaren Zubereitungen können vor der vollständigen Umsetzung der Bestandteile bei der Schaumbildung in einer oder mehreren Komponenten aufbewahrt werden.

2-komponentige Zubereitungen können hergestellt werden, indem für die erste Komponente aus Organopolysiloxanen (A) und einem Überschuß an Di- oder Polyisocyanaten (B) eine Mischung aus isocyanatterminierten Organopolysiloxan-Polyurethan-Prepolymeren (PI) erzeugt wird. Werden dabei ausschließlich aminoalkylfunktionelle Silicone (A) eingesetzt, so kann die Reaktion unkatalysiert ablaufen, andernfalls ist die Zugabe eines Organozinn- oder eines Aminkatalysators (D) bevorzugt. Über die Größe des Überschusses an Di- oder Polyisocyanaten (B) läßt sich die mittlere Molmasse und damit die Viskosität der Prepolymere (P) einstellen. Gegebenenfalls können die isocyanatterminierten Prepolymere (PI) auch noch unverbrauchte Di- oder Polyisocyanate (B) enthalten. Neben den hydroxyalkyl- oder aminoalkylfunktionellen Polysiloxanen (A) können bei dieser Reaktion als isocyanatreaktive Substanzen auch noch geringe Mengen an monomeren oder oligomeren Alkoholen oder Aminen mit 2 bis 5 OH- bzw. NH-Gruppen pro Molekül, z.B. Butandiol oder Pentaerythrit, eingesetzt werden. Die bevorzugten Mengen an eingesetzten Alkoholen /Aminen betragen dabei 0 bis 30 Gew.-% bezogen auf die Organopolysiloxane (A). Zu dieser Mischung werden vorzugsweise anschließend Katalysator (D) sowie gegebenenfalls.weitere Additive gegeben und gelöst bzw. einemulgiert.
Durch die Vermischung mit der zweiten Komponente, die Wasser als Treibmittel (C) sowie gegebenenfalls weitere Treibmittel (C) enthält, wird anschließend die Schaumbildung und -härtung erreicht. Durch Umsetzung der Komponenten dieser Zubereitungen werden harte Schäume erhalten.

Eine weitere Möglichkeit zur Herstellung von 2- oder mehrkomponentigen Systemen läßt sich durch eine erste Komponente realisieren, die eine Mischung, bevorzugt eine Emulsion oder Lösung, aus Siliconprepolymeren (PS) und Wasser enthält. Die zweite Komponente hingegen enthält das Di- oder Polyisocyanat (B). Der Katalysator (D) befindet sich bevorzugt in der ersten Komponente. Des weiteren ist es auch möglich, daß der Katalysator als dritte Komponente erst nach der Vermischung der ersten beiden Komponenten zugegeben wird. Das letztgenannte Vorgehen kann sinnvoll sein, um eine besonders gute Vermischung der ersten beiden Komponenten vor dem Beginn der Schaumbildung zu erreichen.
Dabei werden wiederumSiliconprepolymere (PS) eingesetzt, deren Kettenenden ausgewählt werden aus Aminoalkyl- und Hydroxyalkylgruppen der allgemeinen Formel (1).
Als Siliconprepolymere (PS) können einerseits die reinen Organopolysiloxane (A) eingesetzt werden oder auch OH-/NH-terminierte Siloxanprepolymere (PSB), die durch eine Reaktion von Organopolysiloxanen (A) mit einem Unterschuß an Di- oder Polyisocyanaten (B) hergestellt worden sind. Über die Größe des Unterschusses läßt sich dabei die mittlere Molmasse der Prepolymere (PS) und damit deren Viskosität der Silicon-Wasser-Emulsion einstellen. Neben den Organopolysiloxanen (A) können bei dieser Reaktion als isocyanatreaktive Substanzen auch noch monomere oder oligomere Alkohole oder Amine mit 2 bis 5 OH- bzw. NH-Gruppen, z.B. Butandiol oder Pentaerythrit, verwendet werden. Die bevorzugten Mengen an eingesetzten Alkoholen und/oder Aminen liegen dabei zwischen 0 und 30 Gew.-% bezogen auf die Organopolysiloxane (A). Des weiteren können dieselben Mengen an reinen Alkoholen oder Aminen mit 2 bis 5 OH- bzw. NH-Gruppen pro Molekül in der Silicon-Wasser-Emulsion zugegen sein.

Der ersten Komponente wird dabei vorzugsweise ein Emulgator oder Lösungsvermittler zugesetzt, der zu stabilen Silicon-Wasser-Emulsionen bzw. Silicon-Wasser-Lösungen führt. Bevorzugt werden 0,05-0,5 g Emulator / Lösungsvermittler pro 1 g Wasser verwendet. Beispiele für Emulgatoren / Lösungsvermittler stellen beispielsweise Fettalkoholpolyglykolether, Fettalkoholpolyglycerinether, Polyoxyethylenglycerinester oder Isotridecanolethoxylat dar. Durch Umsetzung der Komponenten dieser Zubereitungen werden weiche elastische Schäume erhalten. In vielen Fällen ist es von Vorteil, Schaumstabilisatoren (E) zuzusetzen. Die Schaumstabilisatoren (E) können dabei prinzipiell in sämtlichen Komponenten enthalten sein, bevorzugt befinden sie sich jedoch in der Silicon-Wasser-Komponente. Zudem ist auch der Zusatz eines weiteren, physikalischen Treibmittels (CP) möglich, um die Schaumbildung zu unterstützen und so zu Schäumen mit noch geringerer Dichte zu gelangen. Auch das Treibmittel (C) kann sich dabei in allen Komponenten befinden. Sämtliche Komponenten können zudem weitere Additive enthalten. In Frage kommen hier u.a. sämtliche der oben bereits genannten Additive und Zusatzstoffe.

Des weiteren können auch 1-komponentige Zubereitungen hergestellt werden indem die oben beschriebenen isocyanatterminierten Organopolysiloxan-Polyurethan-Prepolymeren (PI) mit einem physikalischem Treibmittel (CP), gegebenenfalls Katalysator (D) sowie gegebenenfalls weiteren Additiven versetzt werden. Nach dem Aufbringen eines so hergestellten 1-Komponenten-Schaumes kann dieser dann durch eine Reaktion mit der Luftfeuchtigkeit aushärten. Durch Aushärtung dieser Zubereitungen werden harte Schäume erhalten.

Gegenstand der Erfindung sind auch die Schäume, die erhalten werden können durch Aushärtung der 1-komponentigen Zubereitungen sowie durch Umsetzung der Komponenten in mehrkomponentige Zubereitungen. Des weiteren sind auch die entsprechenden Verfahren zur Herstellung der Schäume Gegenstand dieser Erfindung.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

### Beispiel 1:

1000 g Bishydroxy-terminiertes Polydimethylsiloxan mit einem Mn von 3000 g/mol (bestimmt durch ¹H-NMR-Spektroskopie) werden bei 80 °C mit 79,4 g Poly(1,1-Dimethyl-1-sila-2-oxacyclopentan) mit einer Viskosität von 40 mPas und 100 mg Ameisensäure umgesetzt. ¹H-NMR und ²⁹Si-NMR zeigen, daß nach einer Reaktionszeit von 4 Stunden alle OH-Gruppen quantitativ zu Hydroxypropyl-Einheiten umgesetzt sind. Anschließend werden zur Deaktivierung des Katalysators 500 mg Triethylamin zu der Reaktionslösung gegeben und kurz im Vakuum (5 mbar) bei 80 °C destilliert. Zurück bliebt reines Bishydroxypropylpolydimethylsiloxan.

### Beispiel 2:

20 g Bishydroxypropylpolydimethylsiloxan nach Beispiel 1 werden mit 0,05 g Dibutylzinndilaurat und 0,1 g N,N,N,N-Tetramethyl-bis-(2-Aminoethyl)-methylamin (Jeffcat® PMDETA von Huntsman Corp.) als Katalysatoren, 0,15 g Emulgator (Atlas® G-1300 von Deutsche ICI GmbH, Frankfurt a. Main), 0,4 g Schaumstabilisator PC STAB EP 05 (Wacker Chemie GmbH, Germany) und 0,5 g Wasser vermischt. Mittels einer schnellaufenden Stator-Rotor-Rührvorrichtung (Ultraturrax®, 5 min bei 15.000 U/min) wird eine Emulsion erzeugt, die nur noch eine minimale Trübung aufweist. Die Emulsion ist auch nach mehreren Tagen noch vollständig stabil.

Zu dieser Emulsion werden 5,9 g TDI gegeben und mittels einer schnellaufenden Stator-Rotor-Rührvorrichtung (Ultraturrax®, 30 sec. bei 15.000 U/min) mit der Emulsion vermischt. Nach ca. 30-60 sec. setzten eine exotherme Reaktion und Schaumbildung ein. Die Schaumbildung ist nach ca. 30 sec abgeschlossen, während die Wärmeentwicklung noch ca. 60 sec weiterläuft und danach langsam abklingt. Das Volumen des Schaumes beträgt das 6-8 Fache des Ausgangsvolumens. Es wird ein weich-elastischer Schaum mit feiner Porenstruktur erhalten.

### Beispiel 3:

20 g Bishydroxypropylpolydimethylsiloxan mit einer mittleren Molmasse von ca. 700 g/mol werden mit 0,1 g Dibutylzinndilaurat und 0,1 g N,N,N,N-Tetramethyl-bis-(2-Aminoethyl)-methylamin (Jeffcat® PMDETA von Huntsman Corp.) als Katalysatoren, 0,2 g Emulgator (Atlas® G-1300 von Deutsche ICI GmbH, Frankfurt a. Main), 0,4 g Schaumstabilisator PC STAB EP 05 (Wacker Chemie GmbH, Germany) und 1,0 g Wasser vermischt. Mittels einer schnellaufenden Stator-Rotor-Rührvorrichtung (Ultraturrax®, 5 min bei 15.000 U/min) wird eine Emulsion erzeugt, die nur noch eine minimale Trübung aufweist. Die Emulsion ist auch nach mehreren Tagen noch vollständig stabil.

Zu dieser Emulsion werden 14,6 g TDI gegeben und einer schnellaufenden Stator-Rotor-Rührvorrichtung (Ultraturrax®, 30 sec. bei 15.000 U/min) mit der Emulsion vermischt. Nach ca. 30 sec. setzten eine stark exotherme Reaktion und Schaumbildung ein. Die Schaumbildung ist nach ca. 30 sec abgeschlossen, während die Wärmeentwicklung noch ca. 60 sec weiterläuft und danach langsam abklingt. Das Volumen des Schaumes beträgt etwa das 10 fache des Ausgangsvolumens. Es wird ein grobporiger Schaum mit extrem hoher mechanischer Härte erhalten.

### Beispiel 4:

20 g Bishydroxypropylpolydimethylsiloxan nach Beispiel 1 werden mit 0,1 g Dibutylzinndilaurat als Katalysator, 0,2 g Emulgator (Atlas® G-1300 von Deutsche ICI GmbH, Frankfurt a. Main) und 1,28 g polymerem MDI (Voranate® M220 von Dow Chemical) mit einer mittleren Funktionalität von 2,7 versetzt und an einer schnellaufenden Stator-Rotor-Rührvorrichtung (Ultraturrax®) für ca. 5 min miteinander vermischt. Dabei erwärmt sich die Mischung auf etwa 60 °C. Danach lassen sich mittels IR-Spektroskopie keine freien Isocyanatgruppen mehr nachweisen. Zu der erhaltenen Mischung werden 0,5 g Wasser und 0,1 g N,N,N,N-Tetramethyl-bis-(2-Aminoethyl)-methylamin (Jeffcat® PMDETA von Huntsman Corp.) gegeben und mittels einer schnellaufenden Stator-Rotor-Rührvorrichtung (Ultraturrax®) wird eine stabile Emulsion hergestellt.

Zu dieser Mischung werden 4,06 g polymeres MDI (Voranate® M220) gegeben und mittels einer schnellaufenden Stator-Rotor-Rührvorrichtung (Ultraturrax®, 30 sec. bei 15.000 U/min) mit der Emulsion vermischt. Nach ca. 30 sec. setzen eine exotherme Reaktion und eine spontane Schaumbildung ein. Die Schaumbildung ist nach ca. 2 min abgeschlossen, während die Wärmeentwicklung noch für ca. 1 min weiterläuft und dann langsam abklingt. Das Volumen des Schaumes beträgt das 4-6 fache des Ausgangsvolumens. Es wird ein weich-elastischer Schaum mit sehr feiner Porenstruktur erhalten.

## Patentansprüche

1. Schäumbare Zubereitungen aus den Bestandteilen
(A) lineare oder verzweigte Organopolysiloxane, deren Kettenenden zu mindestens 95 % mit Aminoalkyl- oder Hydroxyalkylgruppen der allgemeinen Formel (1)
-O-SiR¹ ₂O-SiR² ₂-R³-Z (1),
endterminiert sind, herstellbar durch Umsetzung von linearen oder verzweigten Organopolysiloxanen, welche Endgruppen der allgemeinen Formel (2)
-O-SiR¹ ₂-OH (2),
aufweisen, mit Organosiliciumverbindungen, die aus Strukturelementen der allgemeinen Formel (3) zusammengesetzt sind,
-[SiR² ₂-R³-Y-]ₖ (3),
wobei
**R**^{**1**} und **R**^{**2**} einen monovalenten, gegebenenfalls mit -CN, oder Halogen substituierten C₁-C₁₂-Kohlenwasserstoffrest, in dem eine oder mehrere, einander nicht benachbarte Methyleneinheiten durch Gruppen -O- ersetzt sein können,
**R**^{**3**} einen divalenten, gegebenenfalls Cyano- oder halogensubstituierten C₁-C₁₂-Kohlenwasserstoffrest,
**Z** eine Gruppe OH oder NH₂,
**Y** ein Sauerstoffatom oder einen Rest NR⁴,
**R**^{**4**} ein Wasserstoffatom oder ein weiterer Rest der allgemeinen Formel (3), in der **k** den Wert 1 hat und **Y** eine Gruppe NH₂ bedeutet, und
**k** eine ganze Zahl von 1 bis 1000 bedeuten,
(B) Di- oder Polyisocyanate und
(C) Treibmittel.

2. Schäumbare Zubereitungen nach Anspruch 1, bei denen mindestens 99 % der Kettenenden der Organopolysiloxane (A) mit Aminoalkyl- oder Hydroxyalkylgruppen der allgemeinen Formel (1) endterminiert sind.

3. Schäumbare Zubereitungen nach Anspruch 1 oder 2, bei denen an einem Molekül Organopolysiloxan (A) sowohl Aminoalkylals auch Hydroxyalkylgruppen der allgemeinen Formel (1) vorhanden sind.

4. Schäumbare Zubereitungen nach Anspruch 1 bis 3, bei denen der Polymersationsgrad n der Polyorganosiloxankette (A) 5 bis 100 beträgt.

5. Schäumbare Zubereitungen nach Anspruch 1 bis 4, bei denen die Organosiliciumverbindungen, die aus Strukturelementen der allgemeinen Formel (3) zusammengesetzt sind, ausgewählt werden aus Verbindungen der Formeln 6 und 7, 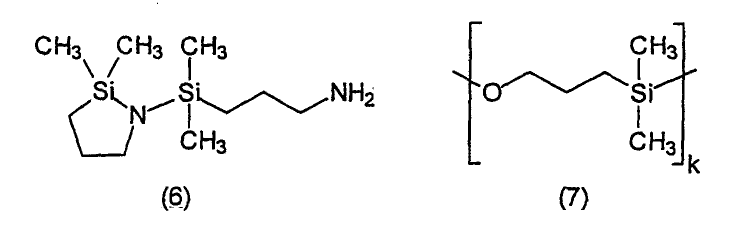 wobei
**k** eine ganze Zahl von mindestens 2 bedeutet.

6. Schäumbare Zubereitungen nach Anspruch 1 bis 5, welche Katalysatoren (D) enthalten, die ausgewählt werden aus Organozinnverbindungen, organischen Eisenverbindungen, organischen Titanaten und tertiären Aminen.

7. 2-komponentige schäumbare Zubereitungen nach Anspruch 1 bis 6, enthaltend in der ersten Komponente isocyanatterminiertes Organopolysiloxan-Polyurethan-Prepolymer (PI), das ein Umsetzungsprodukt aus Organopolysiloxanen (A) und einem Überschuß an Di- oder Polyisocyanaten (B) ist, und
in der zweiten Komponente Wasser als Treibmittel (C).

8. 1-komponentige schäumbare Zubereitungen nach Ansprüchen 1 bis 6, enthaltend isocyanatterminiertes Prepolymer (PI) gemäß Anspruch 7, physikalisches Treibmittel (CP) und Katalysator (D)

9. Mehr-komponentige schäumbare Zubereitungen nach 1 bis 6, enthaltend in der ersten Komponente Siliconprepolymere (PS), deren Kettenenden ausgewählt werden aus Aminoalkyl- und Hydroxyalkylgruppen der allgemeinen Formel (1) und Wasser, und in der zweiten Komponente Di- oder Polyisocyanat (B).

10. Mehr-komponentige schäumbare Zubereitungen nach Anspruch 9, enthaltend in der ersten Komponente als Siliconprepolymere (PS) die Organopolysiloxane (A).

11. Mehr-komponentige schäumbare Zubereitungen nach Anspruch 9,enthaltend in der ersten Komponente als Siliconprepolymere (PS) Siloxanprepolymere (PSB), die durch eine Reaktion von Organopolysiloxanen (A) mit einem Unterschuß an Di- oder Polyisocyanaten (B) hergestellt worden sind.

12. Schäume, die erhalten werden können durch Aushärtung der 1komponentigen Zubereitungen und Umsetzung der Komponenten in mehr-komponentigen Zubereitungen gemäß Anspruch 1 bis 11.

13. Verfahren zur Herstellung der Schäume gemäß Anspruch 12, bei dem die 1-komponentigen Zubereitungen ausgehärtet werden und die Komponenten in mehr-komponentigen.. Zubereitungen miteinander umgesetzt werden.

## Claims

1. Foamable compositions comprising the constituents
(A) linear or branched organopolysiloxanes in which at least 95% of the chain ends are terminated by aminoalkyl or hydroxyalkyl groups of the general formula (1)
-O-SiR¹ ₂O-SiR² ₂-R³-Z (1),
and which can be prepared by reacting linear or branched organopolysiloxanes having end groups of the general formula (2)
-O-SiR¹ ₂-OH (2),
with organosilicon compounds composed of structural elements of the general formula (3),
-[SiR² ₂-R³-Y-]ₖ (3)
where
R¹ and R² are each a monovalent, unsubstituted or -CN or halogen-substituted C₁-C₁₂-hydrocarbon radical in which one or more nonadjacent methylene units can be replaced by -O- units,
R³ is a divalent, unsubstituted or cyano- or halogen-substituted C₁-C₁₂-hydrocarbon radical,
Z is an OH or NH₂ group,
Y is an oxygen atom or an NR⁴ radical,
R⁴ is a hydrogen atom or a further radical of the general formula (3) in which k is 1 and Y is an NH₂ group, and
k is an integer from 1 to 1 000,
(B) diisocyanates or polyisocyanates and
(C) blowing agents.

2. Foamable compositions according to Claim 1, in which at least 99% of the chain ends of the organopolysiloxanes (A) are terminated by aminoalkyl or hydroxyalkyl groups of the general formula (1).

3. Foamable compositions according to Claim 1 or 2, in which both aminoalkyl groups and hydroxyalkyl groups of the general formula (1) are present in one molecule of organopolysiloxane (A).

4. Foamable compositions according to any of Claims 1 to 3, in which the degree of polymerization n of the polyorganosiloxane chain (A) is from 5 to 100.

5. Foamable compositions according to any of Claims 1 to 4, in which the organosilicon compounds composed of structural elements of the general formula (3) are selected from among compounds of the formulae 6 and 7, 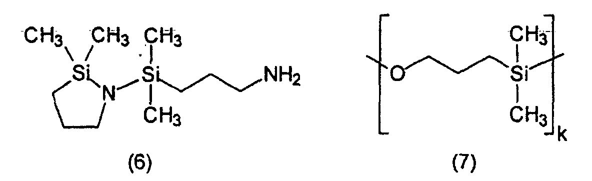 where
k is an integer of at least 2.

6. Foamable compositions according to any of Claims 1 to 5 which contain catalysts (D) selected from among organotin compounds, organic iron compounds, organic titanates and tertiary amines.

7. 2-Component foamable compositions according to any of Claims 1 to 6 containing
an isocyanate-terminated organopolysiloxane-polyurethane prepolymer (PI) which is a reaction product of organopolysiloxanes (A) and an excess of diisocyanates or polyisocyanates (B) in the first component and
water as blowing agent (C) in the second component.

8. 1-Component foamable compositions according to any of Claims 1 to 6 containing an isocyanate-terminated prepolymer (PI) according to Claim 7, physical blowing agent (CP) and catalyst (D).

9. Multicomponent foamable compositions according to any of Claims 1 to 6 containing silicone prepolymers (PS) whose chain ends are selected from among aminoalkyl and hydroxyalkyl groups of the general formula (1) and water in the first component and diisocyanate or polyisocyanate (B) in the second component.

10. Multicomponent foamable compositions according to Claim 9 containing the organopolysiloxanes (A) as silicone prepolymers (PS) in the first component.

11. Multicomponent foamable compositions according to Claim 9 containing siloxane prepolymers (PSB) which have been prepared by reaction of organopolysiloxanes (A) with a deficiency of diisocyanates or polyisocyanates (B) as silicone prepolymers (PS) in the first component.

12. Foams which can be obtained by curing of the 1-component compositions and reaction of the components in multicomponent compositions according to any of Claims 1 to 11.

13. Process for producing the foams according to Claim 12, in which the one-component compositions are cured and the components in multicomponent compositions are reacted with one another.

## Revendications

1. Préparations susceptibles d'être transformées en mousses, à base des composants
(A) organopolysiloxanes linéaires ou ramifiés, dont les extrémités de chaîne se terminent à raison d'au moins 95 % par des groupes aminoalkyle ou hydroxyalkyle de formule générale (1)
-O-SiR¹ ₂O-SiR² ₂-R³-Z (1),
pouvant être préparés par réaction d'organopolysiloxanes linéaires ou ramifiés qui comportent des groupes en bout de chaîne de formule générale (2)
-O-SiR¹ ₂-OH (2),
avec des composés organosiliciés qui sont constitués d'éléments structuraux de formule générale (3)
-[SiR² ₂-R³-Y-]ₖ (3),
où
**R**^{**1**} et **R**^{**2**} représentent un radical hydrocarboné monovalent en C₁-C₁₂ éventuellement substitué par -CN ou par un atome d'halogène, dans lequel un ou plusieurs groupes méthylène non contigus peuvent être remplacés par des groupes -O-,
**R**^{**3**} représente un radical hydrocarboné divalent en C₁-C₁₂ éventuellement substitué par un groupe cyano ou par un atome d'halogène,
**Z** représente un groupe OH ou NH₂,
**Y** représente un atome d'oxygène ou un radical NR⁴,
**R**^{**4**} représente un atome d'hydrogène ou un autre radical de formule générale (3) dans laquelle **k** a la valeur 1 et **Y** représente un groupe NH₂, et
**k** représente un nombre entier allant de 1 à 1 000,
(B) di- ou polyisocyanates et
(C) agent d'expansion.

2. Préparations susceptibles d'être transformées en mousses selon la revendication 1, dans lesquelles au moins 99 % des extrémités de chaîne des organopolysiloxanes (A) se terminent par des groupes aminoalkyle ou hydroxyalkyle de formule générale (1).

3. Préparations susceptibles d'être transformées en mousses selon la revendication 1 ou 2, dans lesquelles aussi bien des groupes aminoalkyle que des groupes hydroxyalkyle de formule générale (1) sont présents sur une molécule d'organopolysiloxane (A).

4. Préparations susceptibles d'être transformées en mousses selon l'une quelconque des revendications 1 à 3, dans lesquelles le degré de polymérisation n de la chaîne polyorganosiloxane (A) va de 5 à 100.

5. Préparations susceptibles d'être transformées en mousses selon l'une quelconque des revendications 1 à 4, dans lesquelles les composés organosiliciés qui sont constitués d'éléments structuraux de formule générale (3) sont choisis parmi des composés de formules 6 et 7 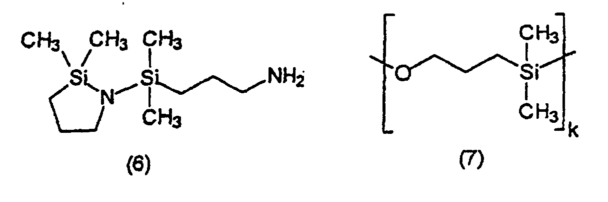 dans lesquelles
**k** représente un nombre entier égal au moins à 2.

6. Préparations susceptibles d'être transformées en mousses selon l'une quelconque des revendications 1 à 5, qui contiennent des catalyseurs (D) qui sont choisis parmi des composés organostanniques, des composés organiques du fer, des titanates organiques et des amines tertiaires.

7. Préparations susceptibles d'être transformées en mousses à deux composants selon l'une quelconque des revendications 1 à 6, contenant dans le premier composant un prépolymère organopolysiloxane-polyuréthanne (PI) à terminaison isocyanate, qui est un produit de réaction d'organopolysiloxanes (A) et d'un excès de di- ou polyisocyanates (B), et dans le second composant de l'eau en tant qu'agent d'expansion (C).

8. Préparations susceptibles d'être transformées en mousses à un composant selon l'une quelconque des revendications 1 à 6, contenant un prépolymère (PI) à terminaison isocyanate selon la revendication 7, un agent d'expansion physique (CP) et un catalyseur (D).

9. Préparations susceptibles d'être transformées en mousses à plusieurs composants selon l'une quelconque des revendications 1 à 6, contenant dans le premier composant des prépolymères silicone (PS) dont les extrémités de chaîne sont choisies parmi des groupes aminoalkyle et hydroxyalkyle de formule générale (1) et de l'eau, et dans le deuxième composant un di- ou polyisocyanate (B).

10. Préparations susceptibles d'être transformées en mousses à plusieurs composants selon la revendication 9, contenant dans le premier composant, en tant que prépolymères silicone (PS), les organopolysiloxanes(A).

11. Préparations susceptibles d'être transformées en mousses à plusieurs composants selon la revendication 9, contenant dans le premier composant, en tant que prépolymères silicone (PS), des prépolymères siloxane (PSB) qui ont été préparés par une réaction d'organopolysiloxanes (A) avec une quantité insuffisante de di- ou polyisocyanates (B).

12. Mousses qui peuvent être obtenues par durcissement des préparations à un composant et réaction des composants dans des préparations à plusieurs composants selon l'une quelconque des revendications 1 à 11.

13. Procédé pour la production des mousses selon la revendication 12, dans lequel les préparations à un composant sont durcies et les composants dans les préparations à plusieurs composants sont mis en réaction les uns avec les autres.
